# EUROPÄISCHE PATENTSCHRIFT

(11) **EP 0 619 268 B1**
(45) Veröffentlichungstag und Bekanntmachung des Hinweises auf die Patenterteilung: **21.05.1997**
(21) Anmeldenummer: 93810257.1
(22) Anmeldetag: 08.04.1993
(51) Int. Cl.: C01B 7/07

(54) **Verfahren und Einrichtung zur Erzeugung von Chlorwasserstoff aus chlorhaltigem Abfallstoff**
Process and installation for the production of hydrogen chloride from chlorine containing waste
Procédé et installation pour produire du gaz chlorhydrique à partir de déchets contenant du chlore

(43) Veröffentlichungstag der Anmeldung: 12.10.1994
(73) Patentinhaber: CT Umwelttechnik AG, CH-8404 Winterthur (CH)
(72) Erfinder: Sowieja, Dietmar, W-7987 Weingarten (DE); Hantelmann, Harald, W-7981 Horgenzell (DE); Schaub, Martin, CH-8483 Kollbrunn (CH)
(74) Vertreter: Heubeck, Bernhard

(56) Entgegenhaltungen:
- EP-A- 0 393 402
- EP-A- 0 504 622
- DE-A- 2 634 959

## Beschreibung

Die Erfindung betrifft ein Verfahren zur Erzeugung von Chlorwasserstoff aus chlorhaltigem Abfallstoff und eine Einrichtung zum Durchführen des Verfahrens. Beispielsweise besteht der Abfallstoff aus Abfall-PVC oder aus PVC-haltigen Abfällen.

Es sind Verfahren bekannt, Salzsäure aus Abgasen von Müllverbrennungsanlagen zu gewinnen: siehe z.B. EP-A 0 393 402 oder DE-OS 41 06 373. Es ist Aufgabe der Erfindung, bekannte Teilverfahren zu kombinieren und derart weiterzubilden, dass aus chlorhaltigem Abfallstoff mittels Aufkonzentrierungen und Reinigungsmassnahmen Chlorwasserstoff gewonnen werden kann, der als Ausgangsprodukt für die Herstellung von neuem PVC oder VC (Vinylchlorid) verwendbar ist. Dabei soll zur Schonung der Umwelt nicht wesentlich mehr als ein Prozent des im Abfallstoff gebundenen Chlors verloren gehen. Auch bezüglich dem Energieaufwand bei bekannten Produktionsverfahren, die von Chlor-Alkali-Elektrolysen mit NaCl als Rohstoff ausgehen, soll mit der erfindungsgemässen Chlorrückgewinnung ein vorteilhafteres Verfahren geschaffen werden.

Diese Aufgabe wird durch ein Verfahren mit den im Anspruch 1 genannten Merkmalen gelöst. Dabei sind für die Erfindung jene Merkmale besonders wichtig, die eine Rückspeisung von chloridhaltigen Zwischenprodukten in das Verfahren betreffen.

Die abhängigen Ansprüche 1 bis 13 beziehen sich auf das Verfahren. Die Ansprüche 14 bis 20 sind auf die Einrichtung oder Gesamtanlage zum Durchführen des erfindungsgemässen Verfahrens gerichtet und Anspruch 21 betrifft die Verwendung der Einrichtung bzw. des Verfahrens. Nachfolgend wird die Erfindung anhand von Figuren erläutert. Es zeigen:
- Fig. 1: ein Blockschema zum gesamten erfindungsgemässen Verfahren,
- Fig. 2: ein Blockschema zur Gasreinigung und Herstellung von Rohsäure,
- Fig. 3: ein Blockschema zur Abwasserbehandlung und
- Fig. 4: ein Anlagenschema zur Herstellung von Chlorwasserstoff aus Rohsäure.

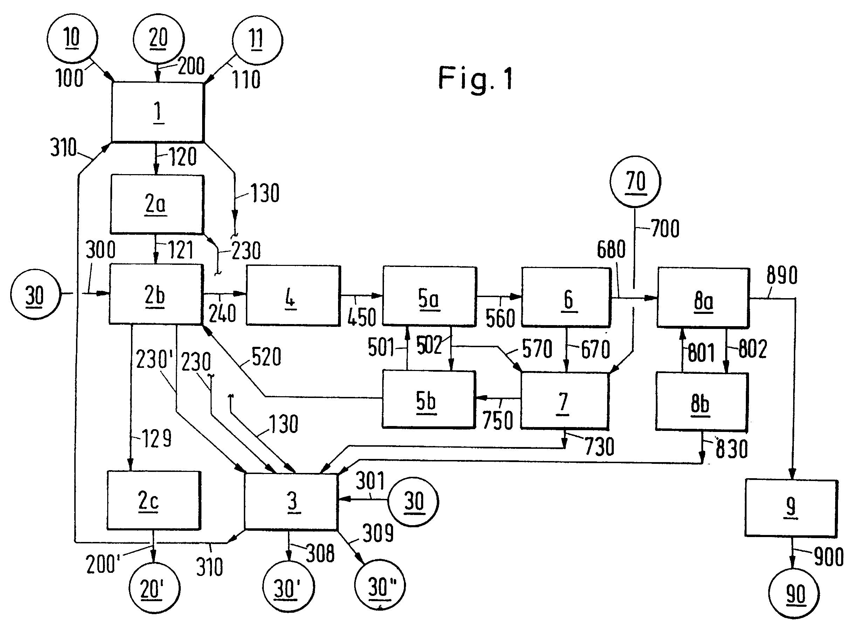

Die rechteckigen Blöcke in Fig.1 haben folgende Bedeutung: Block 1 = Verbrennung des chlorhaltigen Abfallstoffs 100; Block 2a = Staubabscheidung aus dem Rauchgas 120; Block 2b = Wäsche des staubarmen Rauchgases 121, Erzeugung von Rohsäure 240 (im wesentlichen Salzsäure, rund 20% HCl); Block 2c = Weiterbehandlung des HCl-freien Rauchgases 129; Block 3 = Abwasserbehandlung; Block 4 = Umwandlung von Cl₂ in Chlorid, Abscheidung von Brom, Iod und Quecksilber; Block 5a = Rektifikationsstufe, Schleppmittel-Destillation (es entsteht aus der Rohsäure 450 ein HCl-reiches Gas 560 mit mindestens 90% HCl); Block 5b = Regeneration des Schleppmittels (wasserarmes Schleppmittel 501, wasserreiches Schleppmittel 502); Block 6 = Elimination von Fluorwasserstoff (HF wird durch Waschmittel 670 entfernt); Block 7 = Aufarbeitungsstation, Reinigungsanlage für Schleppmittel-Teilstrom 570 und Waschmittel 670; Block 8a = Trocknung des gereinigten Gases 680 mittels Sorption; Block 8b = Regeneration des Sorptionsmittels (wasserarmes Sorptionsmittel 801, wasserreiches Sorptionsmittel 802); Block 9 = Verdichtung sowie Kühlung des Produktgases 890 zu Chlorwasserstoff 900, das bei der VC-Herstellung 90 verwendet wird.

Bei der Verbrennung 1 wird der Abfall 100 aus einem Abfalllager 10 mit Luft 200 aus der Umgebung 20 verbrannt. Bei der Abwasserbehandlung 3 wird eine Calciumchloridlösung 310 abgetrennt, die ebenfalls der Verbrennung 1 zugeführt wird. Aufgrund einer Zugabe von Sand 110 aus einem Sandlager 11 geht das Calcium in eine silikatisierte Schlacke 130 über, während das Chlorid für die Chlorwasserstoff-Herstellung erhalten bleibt.

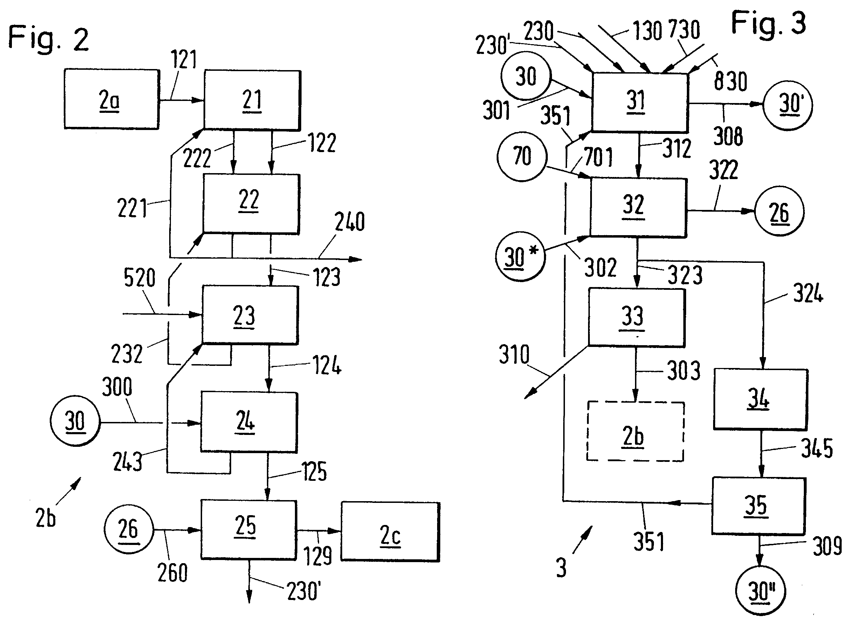

Das Rauchgas 120 enthält als Verbrennungsprodukte hauptsächlich CO₂, HCl, H₂O; weitere Verbrennungsprodukte sind beispielsweise SO₂, HF und NOₓ. In einem ersten Schritt 2a wird das Rauchgas 120 mittels Filter (Tuch- oder Elektrofilter) von Staub befreit und abgekühlt. Die anschliessende Rauchgaswäsche 2b wird anhand der Fig.2 näher erläutert. Das staubarme Rauchgas 121 wird mit Rohsäure 221 schockartig abgekühlt (Quencher 21), wobei die Abkühlung durch die Verdampfung von Wasser erfolgt. Die Temperatur und der H₂O- sowie HCl-Gehalt des Rauchgases 121 bestimmen den maximalen Säuregehalt in der Quencherkolonne, falls adiabatisch gearbeitet wird. Dieser Verfahrensschritt ist aus der Herstellung von konzentrierter Salzsäure aus HCl-haltigem Gas bekannt.

Im anschliessenden Schritt 22 wird das abgekühlte Rauchgas 122 im Gleichstrom mit der Säure 222 in einer Kolonne zu deren Sumpf geleitet, wobei sich ein thermisches sowie stoffliches Gleichgewicht angenähert einstellt, wobei insbesondere HCl aus dem Rauchgas 122 in die Säure 222 übertragen wird. Die Rohsäure 240 kann konzentrationsgeregelt aus der Gleichstromkolonne 22 abgezogen werden.

Aus dem Rauchgas 123 wird mittels einer im Gegenstrom geführten verdünnten Säure 520 weiter HCl entfernt (Schritt 23); dabei wird die aus der Schleppmittel-Regeneration 5b (siehe Fig.1) rezyklierte Säure 520 verwendet. Nach der HCl-Absorption wird diese Säure, neue Bezugszahl 232, in die Gleichstromkolonne 22 eingespeist.

Beim Schritt 24 wird das Rauchgas 124 mit Frischwasser 300 (aus einem Wasserreservoir 30) in Kontakt gebracht - wieder im Gegenstrom. Nach der HCl-Absorption wird dieses Wasser, neue Bezugszahl 243, in die Gegenstromkolonne 23 eingespeist. Das Rauchgas 125 ist nun beinahe frei von HCl. Mittels einer Gegenstromabsorption, Schritt 25, die mit einem Neutralisationsmittel beaufschlagt wird, können saure Gase quantitativ abgeschieden werden, und zwar Rest-HCl, SO₂, SO₃, HF, HBr und HI. Mit dieser Stufe 25 wird die Rauchgaswäsche in Form einer neutralen/basischen Wäsche - bei einem pH-Wert zwischen 4 und 9 - abgeschlossen. Als Neutralisationsmittel wird mit Vorteil eine wässrige Ammoniaklösung 260 (Reservoir 26) verwendet; denn das Ammoniak kann bei der Abwasserbehandlung 3 (siehe Fig.3: Reservoir 26) rückgewonnen und somit rezykliert werden. Bei der neutralen/basischen Wäsche wird, um molekulare Halogene (Cl₂, Br₂, I₂) zumindest teilweise zu beseitigen, zusätzlich ein Reduktionsmittel, vorzugsweise Ammoniumbisulfit oder Ammoniumsulfit, zugeführt. Die verbrauchte Ammoniaklösung 230' wird der Abwasserbehandlung 3 zugeführt (siehe Fig.1).

Nach der Rauchgaswäsche 2b wird das Rauchgas 129 auf bekannte Weise weiterbehandelt. Diese Weiterbehandlung 2c umfasst folgende, nicht einzeln dargestellte Schritte: Tropfenabscheidung; Wärmetausch mit Rauchgas 121 aus Staubentfernung 2a; Wärmetausch mit gereinigtem Rauchgas 200' (Fig.1); Aufheizung mittels Erdgas; katalytische Entstickung unter Zufuhr von Ammoniak; katalytische Oxidation; schliesslich Abgabe des Rauchgases 200' an die Umgebung 20'.

Die Schlacken 130, die Filterstäube 230, die Filterkuchen 730 und die Abwässer 230' sowie 830 (siehe Fig.1 und Fig.3) enthalten lösliche Chloridsalze. Die Chloride werden als Calciumchlorid 310 in der Abwasserbehandlung 3 rückgewonnen. Unlösliche Substanzen werden in fester Form als Filterkuchen 308 in einer Deponie 30' entsorgt. Andere lösliche Stoffe werden mit einem kleinen Abwasserstrom 309 in die Kanalisation 30'' ausgeschieden.

In einer ersten Stufe 31 der Abwasserbehandlung 3 (Fig.3) werden alle genannten Stoffströme 130, 230, 730, 230' und 830 zusammengeführt. Es ist genügend Calciumchlorid vorhanden, sodass das ankommende Ammoniumsalz umgesalzt wird, wobei schwerlöslicher Gips und Ammoniumchlorid entsteht. Gleichzeitig werden lösliche Salze ausgelaugt und Schwermetalle werden integral gefällt, wodurch sie filtrierbar werden. Diese integrale Fällung und Auslaugung ist bekannt. Die Feststoffe werden abfiltriert und mit Frischwasser 301 im Gegenstrom gewaschen. Der Filterkuchen 308 kann mittels Zement verfestigt werden.

Das Filtrat 312 enthält nur noch wasserlösliche Salze; es liegt vor allem Ammonium- und Calciumchlorid vor. In einer weiteren Behandlungsstufe 32 werden die Ammoniumsalze mittels Kalk 701 (Kalkreservoir 70) umgesalzt; das dabei freigesetzte Ammoniak wird mittels Dampf 302 (Dampferzeuger 30*) ausgetrieben und in Form von Ammoniakwasser 322 (Reservoir 26) in der Rauchgaswäsche 2b wieder verwendet.

Die nun vorliegende dünne Sole 323, die vorwiegend Calciumchlorid enthält, wird zu einer höher konzentrierten Sole 310 eingedampft (ein- oder mehrstufige Eindampfung 33). Diese Sole 310 kann zwecks Chlorrückgewinnung in die Verbrennung 1 zurückgeführt werden. Man kann aber auch das Calciumchlorid in einem Drehrohrreaktor zusammen mit Siliciumoxid zu HCl und Calciumsilikat reagieren lassen. Ein bei der Verdampfung der Sole 323 gebildetes Brüdenkondensat 303 kann beispielsweise in der Rauchgaswäsche 2b verwendet werden.

Ein kleiner Teilstrom 324 der dünnen Sole 323 wird abgezweigt. Aus diesem Teilstrom 324 können Metallionen, insbesondere Alkaliionen, als Inhaltsstoffe eines zweiten Filtrats 309 an die Umgebung (Kanalisation 30'') abgeführt werden, wobei das zweite Filtrat 309 aus einer Suspension 345 - nach Fällungs- und Flockungsreaktionen 34 - mit einer Querstrommembranfiltration 35 erzeugt wird. Die bei der Filtration zurückbleibende, feststoffhaltige Flüssigkeit 351 wird in die Stufe 31 rückgeführt. Durch die Schritte 34 und 35 wird erreicht, dass Metalle, die mit üblichen Methoden nicht fällbar sind, aus dem Prozess ausscheiden.

Dank der beschriebenen Verfahrensführung sind die Verluste an Chlor auf die mit dem Filterkuchen 308 und dem kleinen Abwasserstrom 309 abgegebenen Chloride beschränkt.

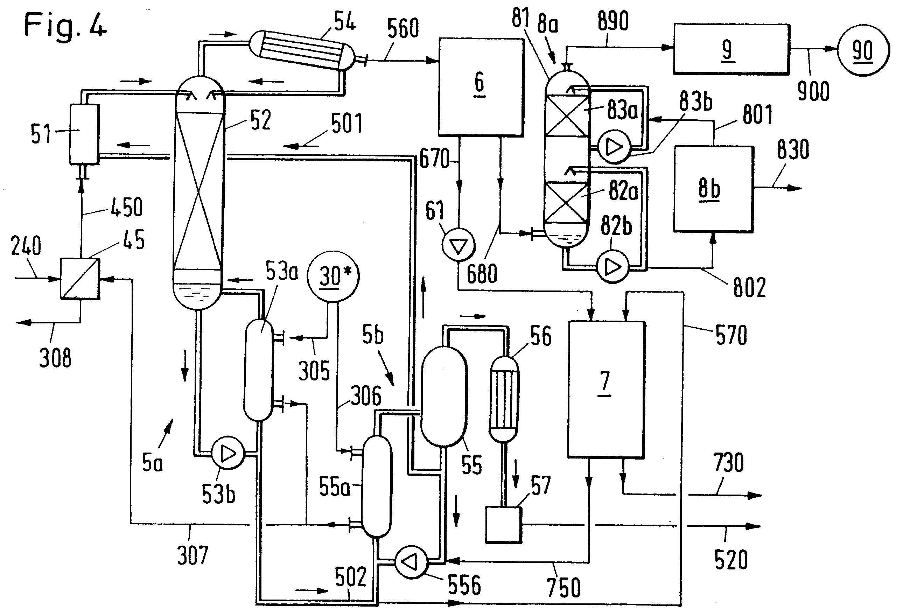

Anhand der Fig.4 wird nachfolgend die Chlorwasserstoff-Herstellung detaillierter erläutert. Der Roh-Chlorwasserstoff wird als Abfallsalzsäure, kurz Rohsäure 240, bei der Gaswäsche 2b erzeugt. Dabei wird die Konzentration der Rohsäure 240 so hoch eingestellt, dass die Zulaufkonzentration möglichst nahe beim azeotropen Punkt liegt. Die Rohsäure 240 wird aus einem nicht dargestellten Tank, der zum Ausgleich kleiner Konzentrationschwankungen immer teilweise gefüllt gehalten wird, abgezogen und in die Rektifikationsstufe 5a (Fig.1) eingespeist.

Die Rohsäure 240, deren Temperatur rund 60°C beträgt, wird in einem Vorwärmer 45 auf die Arbeitstemperatur von rund 90°C gebracht. In einem statischen Mischer 51 wird die vorgewärmte Rohsäure 450 mit Schleppmittel 501 vermischt und in die Abtriebskolonne 52 der Rektifikationsstufe 5a eingespeist. Eine zusätzliche Verstärkerkolonne braucht im vorliegenden Ausführungsbeispiel dank einer relativ hohen Säurekonzentration nicht vorgesehen werden. Im Kolonnensumpf erfolgt die nötige Wärmezufuhr indirekt mittels Heizdampf 305 (Dampferzeuger 30*) in der aussenliegenden Heizkammer 53a (Umwälzpumpe 53b).

Die Kopfbrüden aus der Kolonne 52 werden in einen mit Kühlwasser indirekt gekühlten Oberflächenkondensator 54 geleitet und dort zum grössten Teil (zu rund 80%) niedergeschlagen. Der Rücklauf fliesst wieder zurück in die Abtriebskolonne 52. Der nichtkondensierte Anteil 560 stellt das Roh-Chlorwasserstoffgas dar.

Dieses Gas 560 kann von der Abfall-PVC-Verbrennung her noch durch eine beträchtliche Menge an Fluorwasserstoff, HF, verunreinigt sein, welcher aus mitverbrannten, fluorhaltigen Kunststoffen stammt. In der Vorrichtung 6 wird mittels einer Wäsche der HF-Anteil abgetrennt. Die HF-reiche Waschflüssigkeit 670 wird mittels einer Pumpe 61 abgezogen und in die Vorrichtung 7 verbracht, wo eine Fällungsreaktion durchgeführt wird. (Der Fluorwasserstoff könnte auch als ein zweites Produkt des erfindungsgemässen Verfahrens gewonnen werden.)

Das aus der HF-Eliminierstufe 6 abströmende HCl-Gas 680 enthält noch 5 bis 10% gasförmiges Wasser; es wird im Trocknungsturm 81, einer Gegenstrom-Sorptionskolonne mit zwei Einbautenabschnitten 82a (Umwälzpumpe 82b) und 83a (Pumpe 83b), getrocknet. Mit Vorteil wird Schwefelsäure als Sorptionsmittel 801, 802 verwendet. In einer Hochkonzentrierstufe 8b wird das aufgenommen Wasser aus der Schwefelsäure entfernt und als Kondensat 830 in die Abwasserbehandlung 3 (siehe Fig.1, Fig.3) rückgeführt. Der obere Einbautenabschnitt 83a, der mit hochkonzentrierter Schwefelsäure beaufschlagt wird, ist für die Säuretropfen-Auswaschung vorgesehen.

Das reine HCl-Gas 890 wird in der Vorrichtung 9 zunächst zwecks Dichtevergrösserung vorgekühlt und anschliessend mittels zweier in Serie geschalteter Verdichter mit Zwischenkühler auf den für die Weiterverwendung benötigten Prozessdruck gebracht (7 bar im Fall der Oxichlorierung von neuem VC). Damit der Ansaugdruck des ersten Verdichters möglichst hoch ist, muss der Druckabfall in der Abtriebskolonne 52 und in der Sorptionskolonne 81 möglichst klein sein; es sind daher geordnete Packungen vorgesehen.

Die mit der Rohsäure 240 eingetragenen Verunreinigungen gehen grossenteils in den Schleppmittelkreislauf 501, 502 über. Für die Regeneration des Schleppmittels 502 ist mindestens eine Konzentrierstufe 5b vorgesehen, die aus einem Zwangsumwälzverdampfer 55 mit aussenliegender Heizkammer 55a (Heizdampf 306, Umwälpumpe 55b) besteht. Das ausgetriebene Wasser wird - eventuell nach Durchtritt durch einen Tröpfchenabscheider - in einem Oberflächenkondensator 56 kondensiert und in einem Abtauchbehälter 57 aufgefangen. Das Kondensat 520, in dem 1 bis 2 % HCl gelöst ist, wird wie oben erläutert in die Rauchgaswäsche 2b zurückgeführt (siehe Fig.1, Fig.2). Das in den Heizkammern 53a und 55a aus dem Dampf 305 bzw. 306 entstehende Kondensat 307 wird im Vorwärmer 45, aus dem das abgekühlte Kondensat 308 austritt, als Wärmequelle verwendet.

Ein Teilstrom 570 des wasserreichen Schleppmittels 502 wird in die Vorrichtung 7 (Aufarbeitungsstation) geleitet; diese Aufarbeitungsstation 7 ist eine Reinigungsanlage, die im wesentlichen aus einem quasikontinuierlich betriebenen Fällungs-Vorreaktor, einem chargenweisen betriebenen Fällungs-Hauptreaktor und einem nachgeschalteten Druckkerzenfilter besteht. In den Vorreaktor wird Kalk 700 (Ca(OH)₂) aus einem Reservoir 70 (Fig.1) eingespeist. Der bei der Filtration gebildete Filterkuchen 730 wird in die Abwasserbehandlung 3 gefördert. Die gereinigte Lösung 750 wird wieder in den Hauptkreislauf 501, 502 zurückgegeben, vorzugsweise in die Konzentrierstufe 55.

Für die Fälle, dass in der Rohsäure 240 hohe Anteile an HBr und/oder HI enthalten sind, wird eine Teilanlage 4 - siehe Fig.1 - vorgesehen. In dieser Teilanlage 4 wird vorgewärmte Rohsäure 450 mit einem Oxidationsmittel (H₂O₂) gemischt und oben in eine nicht dargestellte Abtriebskolonne geführt. Diese Br/I-Kolonne, die mit Vorteil dreifach segmentiert ist, wird mit einer kleinen Menge an Heizdampf indirekt oder direkt beheizt (wobei Oxidationsmittel den einzelnen Segmente zugeführt wird). Die Kopfbrüden werden in einem Kopfkondensator niedergeschlagen und das Kondensat in einem Separationsbehälter aufgefangen. Br₂ und I₂ separieren sich vom H₂O-Anteil dank höherer Dichte. Während die kleinen Brom- und Iodmengen über eine Tauchleitung aus dem Verfahren ausgeschieden werden, wird der Wasseranteil wieder in die Br/I-Kolonne rückgeführt.

Die derart vorbehandelte Rohsäure wird aus dem Kolonnensumpf in einen Vorlagebehälter abgezogen. Zur Elimination von molekularem Chlor (Cl₂), wird auf der Strecke in den Vorlagebehälter ein Reduktionsmittel (Hydrazin) zugemischt, wodurch Cl₂ in HCl umgesetzt wird. Für den Fall eines hohen Hg-Ionenanteils kann ein zugeschalteter Ionentauscher für die Quecksilber-Elimination vorgesehen werden.

Ergänzend soll noch folgendes festgehalten werden: Die Rektifikation 5a und die Trocknung 8a werden bei Unterdruck (bezüglich der Umgebung) durchgeführt. Die Absorptionsprozesse bei der Rauchgaswäsche 2b können adiabatisch oder mit Fremdkühlung betrieben werden.

## Patentansprüche

1. Verfahren zur Erzeugung von Chlorwasserstoff, HCl, aus chlorhaltigem Abfallstoff, folgende Schritte umfassend:
Verbrennung des Abfallstoffs,
Erzeugung von Rohsäure aus dem bei der Verbrennung gebildeten Rauchgas mittels Gaswäsche,
Behandlung von Abwasser, das teilweise bei der Rauchgaswäsche anfällt, wobei ein Restabfall mit hohem Feststoffanteil sowie eine chloridhaltige Lösung erzeugt werden,
Rückführung der chloridhaltigen Lösung in die Verbrennung zwecks Chlorrückgewinnung,
Schleppmittel-Destillation der Rohsäure zu einem HCl-reichen Gas bei gleichzeitiger Entfernung von im Schleppmittel löslichen Verunreinigungen,
gegebenenfalls Abscheidung von Fluorwasserstoff aus dem HCl-reichen Gas,
Trocknung des HCl-reichen Gases mittels Sorption, wobei das Sorptionsmittel regeneriert wird und ein dabei anfallendes wässriges Kondensat der Abwasserbehandlung zugeführt wird, und ferner
Aufbereitung des Schleppmittels durch Abdampfen von Wasser und Entfernen von Verunreinigungen mittels Ausfällung und Filtration, wobei einerseits ein anfallendes wässriges Kondensat in die Gaswäsche rückgeführt wird und andererseits abfiltrierte Feststoffe zwecks Chlorrückgewinnung der Abwasserbehandlung zugeführt werden.

2. Verfahren nach Anspruch 1, dadurch gekennzeichnet, dass ein PVC-haltiger Abfall verbrannt wird.

3. Verfahren nach Anspruch 1 oder 2, dadurch gekennzeichnet, dass das HCl-Gas nach Durchführung des Sorptionsschrittes auf einen für die Oxichlorierung bei der VC-Herstellung benötigten Prozessdruck verdichtet wird.

4. Verfahren nach einem der Ansprüche 1 bis 3, dadurch gekennzeichnet, dass bei der Rauchgaswäsche durch mehrstufige Absorption eine zumindest angenähert azeotrope Rohsäure erzeugt wird, wobei der Absorptionsprozess adiabatisch oder mit Fremdkühlung betrieben wird.

5. Verfahren nach Anspruch 4, dadurch gekennzeichnet, dass bei der Destillation ein HCl-reiches Gas mit mindestens 90 % HCl gebildet wird, bei der Sorption das Gas bis auf rund 10 Gewichts-ppm Wasser getrocknet wird und diese zwei Verfahrensschritte bei Unterdruck ausgeführt werden.

6. Verfahren nach einem der Ansprüche 1 bis 5, dadurch gekennzeichnet, dass für eine Umwandlung von molekularem Chlor in Chlorid, eine Abscheidung von Brom sowie Iod und für eine Elimination von Quecksilber aus der Rohsäure gegebenenfalls Separationsmassnahmen vorgesehen werden, die der Schleppmittel-Destillation vorgelagert sind.

7. Verfahren nach einem der Ansprüche 1 bis 6, dadurch gekennzeichnet, dass Kalk, Ca(OH)₂, dem Schleppmittel bei der Entfernung von Verunreinigungen zugemischt wird und eine wässrige Lösung von Calciumchlorid, CaCl₂, als Schleppmittel verwendet wird.

8. Verfahren nach einem der Ansprüche 1 bis 7, dadurch gekennzeichnet, dass als Sorptionsmittel hochkonzentrierte Schwefelsäure verwendet wird.

9. Verfahren nach einem der Ansprüche 1 bis 8, dadurch gekennzeichnet, dass die abschliessende Stufe der Rauchgaswäsche in Form einer neutralen/basischen Wäsche bei einem pH-Wert zwischen 4 und 9 vorliegt und dass Ammoniak als Neutralisationsmittel verwendet wird.

10. Verfahren nach Anspruch 9, dadurch gekennzeichnet, dass bei der neutralen/basischen Wäsche ein Reduktionsmittel, vorzugsweise Ammoniumbisulfit oder Ammoniumsulfit, zugeführt wird.

11. Verfahren nach einem der Ansprüche 9 oder 10, dadurch gekennzeichnet, dass bei der Abwasserbehandlung Ammoniumsalze mittels Kalk umgesalzt werden und dass das dabei freigesetzte Ammoniak mittels Dampf ausgetrieben und in Form von Ammoniakwasser in der Rauchgaswäsche verwendet wird.

12. Verfahren nach einem der Ansprüche 1 bis 11, dadurch gekennzeichnet, dass die bei der Abwasserbehandlung abfiltrierten Feststoffe gewaschen werden, vorzugsweise im Gegenstrom und mit salzfreiem Wasser.

13. Verfahren nach einem der Ansprüche 1 bis 12, dadurch gekennzeichnet, dass bei der Abwasserbehandlung aus einem ersten Filtrat ein Teilstrom abgezweigt wird, mittels dessen Metallionen, insbesondere Alkaliionen, als Inhaltsstoffe eines zweiten Filtrats an die Umgebung abgeführt werden, wobei das zweite Filtrat nach Fällungs- sowie Flockungsreaktionen vorzugsweise mit einer Querstrommembranfiltration erzeugt wird.

14. Einrichtung zum Durchführen des Verfahrens nach einem der Ansprüche 1 bis 13, folgende Komponenten umfassend: einen Verbrennungsofen (1), eine Rauchgas- sowie eine Abwasserbehandlungsanlage (2a,b,c; 3), Kolonnen (52; 81) für die Schleppmittel-Destillation (5a) sowie für die Sorptionstrocknung (8a), Vorrichtungen (5b; 8b) zum Regenerieren des Schleppmittels (502) sowie des Sorptionsmittels (802) und eine Reinigungsanlage (7) für einen Teilstrom (570) des Schleppmittels.

15. Einrichtung nach Anspruch 14, dadurch gekennzeichnet, dass die Destillationskolonne (52) eine Abtriebskolonne ist.

16. Einrichtung nach Anspruch 14 oder 15, dadurch gekennzeichnet, dass für die Regeneration (5b) des Schleppmittels (502) mindestens eine Konzentrierstufe vorgesehen ist, die aus einem Zwangsumwälzverdampfer (55) mit aussenliegender Heizkammer (55a) besteht.

17. Einrichtung nach einem der Ansprüche 14 bis 16, dadurch gekennzeichnet, dass die Reinigungsanlage (7) für das Schleppmittel (570) einen quasikontinuierlich betriebenen Fällungs-Vorreaktor, einen chargenweisen betriebenen Fällungs-Hauptreaktor und ein nachgeschaltetes Druckkerzenfilter umfasst.

18. Einrichtung nach einem der Ansprüche 14 bis 17, dadurch gekennzeichnet, dass die Sorptionskolonne (81) mindestens zwei übereinander angeordnete Einbautenzonen (82a, 83a) aufweist, wobei für jede der Zonen ein eigener Verteilerboden und ein eigener Sorptionsmittel-Kreislauf vorgesehen ist.

19. Einrichtung nach einem der Ansprüche 14 bis 18, dadurch gekennzeichnet, dass die Kolonnen (52, 81) geordnete Packungen aufweisen.

20. Einrichtung nach einem der Ansprüche 14 bis 19, dadurch gekennzeichnet, dass zur Verdichtung (9) des Produktgases auf einen Prozessdruck, insbesondere den für die Oxichlorierung benötigten Druck von 7 bar, zwei in Serie angeordnete Verdichter und ein Vorkühler sowie ein Zwischenkühler vorgesehen sind.

21. Verwendung der Einrichtung nach Anspruch 20 zur Chlorrückgewinnung aus PVC-haltigem Abfall (100) oder anderen chlorhaltigen Abfällen und Herstellung (90) von neuem VC durch Oxichlorierung aus dem bei der Rückgewinnung erzeugten Chlorwasserstoff.

## Claims

1. A process for the production of hydrogen chloride, HCl, from chlorous waste material, comprising the following steps:
- incineration of the waste material,
- production of crude acid by means of gas washing from the flue gas formed during incineration;
- treatment of waste water, which is partially produced during flue gas washing, whereby residual waste having a high solids content and also a high-chloride solution are produced,
- return of the high-chloride solution to the incineration stage for the purpose of the recovery of chlorine,
- entrainer distillation of the crude acid to form an HCl-rich gas with the simultaneous removal of impurities soluble in the entrainer,
- if necessary separation of hydrogen fluoride from the HCl-rich gas,
- drying the HCl-rich gas by means of sorption, whereby the sorbent is regenerated and an aqueous condensate produced as a result is supplied to the waste water treatment, and also
- refinement of the entrainer by evaporation of water and removal of impurities by means of precipitation and filtration, whereby firstly a resultant aqueous condensate is returned to the gas washing stage and secondly filtered-off solids are supplied to the waste water treatment for the purpose of the recovery of chlorine.

2. A process according to Claim 1,
**characterised in that** waste containing PVC is incinerated.

3. A process according to Claim 1 or 2,
**characterised in that** after the performance of the sorption step the HCl gas is compressed to a process pressure required for oxychlorination during the manufacture of VC.

4. A process according to one of Claims 1 to 3,
**characterised in that** during the flue gas washing by multi-stage absorption a crude acid, which is at least almost azeotropic, is produced, whereby the absorption process is operated adiabatically or with forced air cooling.

5. A process according to Claim 4,
**characterised in that** during distillation an HCl-rich gas is formed with at least 90 % HCl, during sorption the gas is dried to approximately 10 ppm by weight water and these two process steps are performed at negative pressure.

6. A process according to one of Claims 1 to 5,
**characterised in that** a precipitation of bromine and also iodine is specified to convert molecular chlorine into chloride and if required separation measures, which are performed before the entrainer distillation, are specified to eliminate mercury from the crude acid .

7. A process according to one of Claims 1 to 6,
**characterised in that** slaked lime, Ca(OH)₂, is added to the entrainer by mixing during the removal of impurities and an aqueous solution of calcium chloride, CaCl₂ is used as entrainer.

8. A process according to one of Claims 1 to 7,
**characterised in that** highly concentrated sulphuric acid is used as the sorbent.

9. A process according to one of Claims 1 to 8,
**characterised in that** the final stage of the flue gas washing operation takes the form of a neutral/basic washing operation with a pH-value of between 4 and 9,
**and in that** ammonia is used as the neutralising agent.

10. A process according to Claim 9,
**characterised in that** during the neutral/basic washing operation a reducing agent, preferably ammonium bisulphite or ammonium sulphite, is supplied.

11. A process according to one of Claims 9 or 10,
**characterised in that** during the waste water treatment ammonium salts undergo double decomposition by means of slaked lime,
**and in that** the ammonia released during this is driven out by means of steam and is used in the form of ammoniacal gas liquor in the flue gas washing operation.

12. A process according to one of Claims 1 to 11,
**characterised in that** the solids filtered off during the waste water treatment are washed, preferably in the counter-flow and with salt-free water.

13. A process according to one of Claims 1 to 12,
**characterised in that** during the waste water treatment from a first filtrate a partial flow is branched off, by means of which metal ions, in particular alkali ions, are discharged as constituents of a second filtrate to the environment, whereby the second filtrate is produced after precipitation and flocculation reactions preferably with a cross-flow membrane filtration.

14. An installation for performing the process according to one of Claims 1 to 13, comprising the following components : an incinerator (1), a flue gas and also a waste water treatment plant (2a, b, c; 3), columns (52; 81) for entrainer distillation (5a) and also for sorption drying (8a), devices (5b; 8b) for the regeneration of the entrainer (502) and also of the sorbent (802) and a cleaning plant (7) for a partial flow (570) of entrainer.

15. An installation according to Claim 14,
**characterised in that** the distilling column (52) is a column stripper.

16. An installation according to Claim 14 or 15,
**characterised in that** for the regeneration (5b) of the entrainer (502) there is provided at least one concentrating stage, which consists of a forced circulation evaporator (55) having an external heating chamber (55a).

17. An installation according to one of Claims 14 to 16,
**characterised in that** the cleaning plant (7) for the entrainer (570) comprises a quasi-continuously operated precipitation prereactor, a precipitation main reactor operated in batches and a pressure cartridge filter connected at the outlet side.

18. An installation according to one of Claims 14 to 17,
**characterised in that** the sorption column (81) comprises at least two built-in zones (82a, 83a) disposed one above the other, whereby each zone is provided with its own distribution base and its own sorbent circulation.

19. An installation according to one of Claims 14 to 18,
**characterised in that** the columns (52, 81) comprise controlled packings.

20. An installation according to one of Claims 14 to 19,
**characterised in that** two compressors disposed in series and a pre-cooler and also an intermediate cooler are provided to compress (9) the product gas to a process pressure, in particular the pressure of 7 bar required for oxychlorination.

21. Use of the installation according to Claim 20 for the recovery of chlorine from waste containing PVC (100) or other chlorous waste and manufacture (90) of new VC by oxychlorination from the hydrogen chloride produced during recovery.

## Revendications

1. Procédé de production de gaz chlorhydrique, HCl, à partir de déchets contenant du chlore, comprenant les étapes ci-après :
combustion des déchets,
production d'acide brut à partir des gaz de fumée constitués lors de la combustion, par un lavage des gaz,
traitement des eaux d'évacuation, produites partiellement lors du lavage des gaz de fumée, un déchet résiduel ayant une teneur élevée en solides ainsi qu'une solution contenant du chlore étant produits,
recyclage de la solution contenant du chlore dans la combustion, aux fins de récupération du chlore,
distillation avec un agent entraînant, de l'acide brut pour obtenir un gaz riche en HCl avec élimination simultanée des impuretés solubles dans l'agent entraînant,
le cas échéant séparation du fluorure d'hydrogène à partir du gaz riche en HCl,
séchage du gaz riche en HCl par sorption, l'agent de sorption étant régénéré et un condensat aqueux produit à cette occasion étant amené au traitement des eaux d'évacuation et, en outre,
préparation de l'agent entraînant par évaporation de l'eau et élimination des impuretés par précipitation et filtration, d'une part, un condensat aqueux produit étant recyclé dans le lavage des gaz et, d'autre part, les solides éliminés par filtration étant amenés au traitement des eaux d'évacuation, à des fins de récupération du chlore.

2. Procédé selon la revendication 1, caractérisé en ce qu'un déchet contenant du PVC est brûlé.

3. Procédé selon la revendication 1 ou 2, caractérisé en ce que le gaz HCl est comprimé après conduite de l'étape de sorption, pour atteindre la pression de processus nécessitée pour l'oxychloruration lors de la fabrication du chlorure de vinyle VC.

4. Procédé selon l'une des revendications 1 à 3, caractérisé en ce que lors du lavage des gaz de fumée, on produit, par une absorption à plusieurs étages, un acide brut au moins à peu près azéotrope, le processus d'absorption étant conduit de façon adiabatique ou avec un refroidissement externe.

5. Procédé selon la revendication 4, caractérisé en ce que, lors de la distillation, est constitué un gaz riche en HCl contenant au moins 90 % d'HCl, lors de la sorption le gaz est séché jusqu'à atteindre environ 10 % en poids d'eau et ces deux étapes de procédé étant conduites avec une dépression.

6. Procédé selon l'une des revendications 1 à 5, caractérisé en ce que pour opérer une conversion du chlore moléculaire en chlorure est prévue une séparation du brome, ainsi que de l'iode, et pour effectuer une élimination du mercure à partir de l'acide brut sont prévues le cas échéant des mesures de séparation, en amont de la distillation à agent entraînant.

7. Procédé selon l'une des revendications 1 à 6, caractérisé en ce que de la chaux, Ca(OH)₂, est ajoutée par mélange à l'agent entraînant, lors de l'élimination des impuretés et une solution aqueuse de chlorure de calcium, CaCl₂, est utilisée comme agent entraînant.

8. Procédé selon l'une des revendications 1 à 7, caractérisé en ce que l'on utilise comme agent de sorption de l'acide sulfurique à haute concentration.

9. Procédé selon l'une des revendications 1 à 8, caractérisé en ce que l'étape finale de lavage des gaz de fumée se présente sous la forme d'un lavage neutre/basique avec une valeur de pH comprise entre 4 et 9 et de l'ammoniaque est utilisée comme agent de neutralisation.

10. Procédé selon la revendication 9, caractérisé en ce que lors du lavage neutre/basique est amené un agent de réduction, de préférence du bisulfite d'ammonium ou du sulfite d'ammonium.

11. Procédé selon l'une des revendications 9 ou 10, caractérisé en ce que, lors du traitement des eaux d'évacuation, les sels d'ammonium sont soumis à une double décomposition au moyen de chaux et en ce que l'ammoniaque alors dégagée est expulsée par utilisation de vapeur et est utilisée sous la forme d'eau ammonicale dans le lavage des gaz de fumée.

12. Procédé selon l'une des revendications 1 à 11, caractérisé en ce que les solides séparés par filtration lors du traitement des eaux d'évacuation sont lavés, de préférence à contre-courant et avec de l'eau déminéralisée.

13. Procédé selon l'une des revendications 1 à 12, caractérisé en ce que, lors du traitement des eaux d'évacuation, on dérive depuis un premier filtrat un courant partiel au moyen des ions métalliques duquel, en particulier des ions alcalins, on évacue à titre de substances contenues, un deuxième filtrat vers l'environnement, le deuxième filtrat étant produit après des réactions de précipitation ainsi que de floculation, de préférence avec une filtration par membrane à courant transversal.

14. Dispositif de mise en oeuvre du procédé selon l'une des revendications 1 à 13, comprenant les composants ci-après: un four d'incinération (1), une installation de traitement des gaz de fumée ainsi que des eaux d'évacuation (2a, b, c; 3), des colonnes (52; 81) destinées à la distillation avec l'agent entraînant (5a) ainsi qu'au séchage par sorption (8a), des dispositifs (5b; 8b) destinés à la régénération de l'agent entraînant (502) ainsi que de l'agent de sorption (802) et une installation d'épuration (7) destinée à un courant partiel (570) de l'agent entraînant.

15. Dispositif selon la revendication 14, caractérisé en ce que la colonne de distillation (52) est une colonne de rectification.

16. Dispositif selon la revendication 14 ou 15, caractérisé en ce qu'est prévu, pour la régénération (5b) de l'agent entraînant (502), au moins un étage de concentration, qui est constitué d'un vaporisateur à circulation forcée (55) avec une chambre de chauffage (55a) montée extérieurement.

17. Dispositif selon l'une des revendications 14 à 16, caractérisé en ce que l'installation d'épuration (7) concernant l'agent entraînant (570) comprend un pré-réacteur de précipitation à fonctionnement quasi continu, un réacteur principal de précipitation à fonctionnement par charges et un filtre en bougie à pression installé en aval.

18. Dispositif selon l'une des revendications 14 à 17, caractérisé en ce que la colonne de sorption (81) présente au moins deux zones à garnissage (82a, 83b) disposées l'une au-dessus de l'autre, un fond distributeur propre et un circuit d'agent de sorption propre étant prévus pour chacune des zones.

19. Dispositif selon l'une des revendications 14 à 18, caractérisé en ce que les colonnes (52, 81) présentent des garnissages en séquence.

20. Dispositif selon l'une des revendications 14 à 19, caractérisé en ce que sont prévus, pour assurer la compression (9) du gaz de produit, afin d'atteindre une pression de processus en particulier la pression de 7 bars nécessitée pour l'oxychloruration, deux compresseurs montés en série et un pré-réfroidisseur ainsi qu'un réfroidisseur intermédiaire.

21. Utilisation du dispositif selon la revendication 20 pour la récupération du chlore à partir de déchets (100) contenant du PVC ou bien d'autres déchets contenant du chlore et pour la fabrication (90) de nouveau VC (Chlorure de vinyle) par oxychloruration à partir du gaz chlorhydrique généré lors de la récupération.
